# EUROPÄISCHE PATENTSCHRIFT

(11) **EP 0 993 854 B1**
(45) Veröffentlichungstag und Bekanntmachung des Hinweises auf die Patenterteilung: **10.12.2008**
(21) Anmeldenummer: 99112865.3
(22) Anmeldetag: 03.07.1999
(51) Int. Cl.: B01D 39/16

(54) **Luftfilter**
Air filter
Filtre d'air

(30) Priorität: 21.09.1998 DE 19843000
(43) Veröffentlichungstag der Anmeldung: 19.04.2000
(73) Patentinhaber: Carl Freudenberg KG, 69469 Weinheim (DE)
(72) Erfinder: Hollingsworth, Anthony, 69488 Birkenau (DE); Berkemann, Ralph, 69509 Mörlenbach (DE); Staudenmayer, Oliver, Dr., West Yorkshire HD2 2HQ (GB)

(56) Entgegenhaltungen:
- EP-A- 0 348 993
- EP-A- 0 534 863
- DE-A- 4 125 250
- DE-C- 4 427 817
- US-A- 4 883 709
- PATENT ABSTRACTS OF JAPAN & JP 1996 820952 A (MITSUBISHI RAYON CO),

## Beschreibung

Die Erfindung betrifft einen Luftfilter nach dem Anspruch 1.

### Stand der Technik

Ein Luftfilter mit einem eine Rohluftseite und eine Reinluftseite aufweisenden Vliesstoff, der aus adhäsiv oder kohäsiv verbundenen Fasern gebildet ist, ist aus der DE 44 27 817 C1 bekannt.

Bei Filtern mit einem Tiefenfiltermaterial werden die abzuscheidenden Teilchen überwiegend in dem Filtermaterial abgeschieden. Im Gegensatz hierzu stehen Oberflächenfilter, bei denen die Teilchen überwiegend an der Oberfläche des Filtermaterials als Filterkuchen angesammelt werden.

Aus der DE 41 25 250 A1 ist ein Luftfiltermaterial bekannt, welches aus einem Laminat aus zwei Vliesstoffschichten besteht. Die der Reinluftseite zugewandte Schicht ist durch Wasserstrahlen verfestigt und weist Fasern einer durchschnittlichen Feinheit kleiner als 2,2 dtex auf. Die der Rohluftseite zugewandte Vliesstoffschicht weist im Vergleich dazu gröbere Fasern auf. Beide Schichten sind durch mechanisches Vernadeln miteinander verbunden. Zwar hat ein solches Filtermedium eine verbesserte Wirksamkeit im Vergleich mit einem rein mechanisch genadelten Vliesstoff. Nachteilig ist jedoch, daß sich beim Laminieren durch Vernadeln auch in der reinluftseitigen Schicht Nadellöcher ausbilden, die sich negativ auf die Filtereffizienz bezüglich kleiner Partikel auswirken.

JP-A-8209521 beschreibt ein Filtermaterial mit einem zweilagigen Aufbau. Eine erste Lage enthält Endlosfilamente mit einer Faserfeinheit zwischen 1 und 4 denier. Auf dieser Lage werden mit Hilfe von Wasser kurze Stapelfasern mit einer Feinheit von weniger als 1 denier und thermisch schmelzbare Stapelfasern abgelegt. Die sich hieraus ergebende zweilagige Struktur wird einer Hochdruckwasserstrahlbehandlung unterzogen, wobei sich aufgrund des zweilagigen Aufbaus ein Dichte-Gradient ergibt

Die EP 0 534 863 A1 beschreibt einen dreilagigen Vliesstoff, welcher einer Hochdruckwasserstrahlbehandlung unterzogen wird. Die mehrlagige Struktur kann dabei mehrfach einer Wasserstrahlbehandlung von einer oder beiden Seiten unterzogen werden.

Vliesstoffe haben sich als Filtermaterial für Luftfilter bewährt und garantieren hervorragende Filtrationseigenschaften. Jedoch erfüllen die bekannten Filtermaterialien nicht alle Wünsche hinsichtlich der Stabilität und Steifigkeit des Filtermaterials. Dieses ist zum einen bedeutsam bei der Herstellung von Luftfiltern, um einen plissierten beziehungsweise gefalteten Filter mit einer entsprechend großen Filteroberfläche herzustellen. Die Steifigkeit ist aber auch für die Funktion des Luftfilters von großer Bedeutung um eine übermäßige Deformation des Filtermaterials im Betrieb zu verhindern. Eine Deformation würde zu einem Anlegen des Filtermaterials führen, was eine sehr hohe Druckdifferenz und eine niedrige Lebensdauer des Luftfilters zur Folge hätte.

### Darstellung der Erfindung

Der Erfindung liegt die Aufgabe zugrunde, einen Luftfilter mit einem besonders steifen Filtermaterial anzugeben.

Diese Aufgabe wird mit den Merkmalen von Anspruch 1 gelöst

Das Flüssigkeitsstrahlen kann insbesondere in einer Hochdruckwasserstrahlbehandlung bestehen, welche aus der Herstellung von Vliesstoffen bekannt ist.

Durch die scharf gebündelten Hochdruckwasserstrahlen, welche den Vliesstoff durchdringen und auf eine flüssigkeitsdurchlässige Unterlage treffen, werden die Fasern verwirbelt. Die durch die Flüssigkeitsstrahlen erfaßten Fasern nehmen dadurch eine schlingenförmige Anordnung ein. Dabei ist erfindungsgemäß die Strahlenergie, welche durch die Flüssigkeitsmasse pro Zeiteinheit und den Flüssigkeitsdruck bestimmt ist, derart bemessen, daß die Fasern von der Rohluftseite zur Reinluftseite hin zunehmend verdichtet sind. Dadurch entstehen verdichtete Bereiche, in denen Teilchen unterschiedlicher Größe abscheidbar sind.

Die in Verbindung mit der adhäsiven und/oder kohäsiven Faserbindung durchgeführte Flüssigkeitsstrahlbehandlung von der Reinluftseite führt zu einem Vliesstoff, der eine überraschend hohe Steifigkeit aufweist und gleichzeitig hervorragende Filtereigenschaften hat. Dies ist deshalb überraschend, da das Hochdruckflüssigkeitsstrahlen bei der Herstellung von Vliesstoffen eingesetzt wird, um Vliesstoffe mit weichem, textilem Griff zu erzeugen. Weiterer Vorteil ist, daß die durch die Flüssigkeitsstrahlbehandlung erzielten Dicken des Filtermaterials von 5 mm und weniger für einen Luftfilter geeignet sind und einen zusätzlichen Kalandrierungsvorgang überflüssig machen können. Zudem können die Herstellungskosten reduziert werden, da auch bei einem einlagigen Vliesstoff unterschiedlich verdichtete Bereiche in einem einzigen Verfahrensschritt erzeugt werden können.

Vorteilhafterweise ist vorgesehen, daß die Fasern Verschlingungen aufweisen, die vor dem adhäsiven und/oder kohäsiven Verbinden durch Flüssigkeitsstrahlen von der Rohluftseite her erzeugt sind. Durch das zusätzliche Flüssigkeitsstrahlen von der Rohluftseite her, welches vorzugsweise mit einer anderen Strahlenergie erfolgt, als das Flüssigkeitsstrahlen von der Reinluftseite her, kann ein besonders festes Tiefenfiltermaterial erhalten werden.

Gemäß einer vorteilhaften Ausbildung ist vorgesehen, daß die Fasern einen Titervon 0,05 bis 50 dtex aufweisen.

Vorteilhafte Filtereigenschaften werden auch dadurch erzielt, daß die Fasern Grobfasern und Feinfasern enthalten. Vorzugsweise liegt der Titer der Grobfasern mindestens um den Faktor 6 über dem Titer der Feinfasern. Der Luftfilter kann somit beispielsweise Feinfasern mit einem Titer von etwa 1 dtex und Grobfasern mit einem Titer von etwa 6 dtex oder mehr aufweisen.

In dem Luftfilter können dann besonders kleine Teilchen abgeschieden werden, wenn die Feinfasern wenigstens teilweise aus gesplitteten Splittfasern bestehen. Splittfasern sind relativ grobe Mehrkomponentenfasern in üblichen krempelfähigen Fasertitern, welche einfach verarbeitet werden können. Durch das Aufspalten der Splittfasern entstehen vergleichsweise feine Fasern. Auf diese Weise können mit herkömmlichen Verfahren auch Flächengebilde mit Mikrofaserstrukturen hergestellt werden.

Die Herstellung des Luftfilters wird dadurch besonders vereinfacht, daß die Splittfasern durch die Flüssigkeitsstrahlbehandlung gesplittet sind.

Eine besonders gute Staubspeicherfähigkeit in dem Filtermaterial wird dadurch erzielt, daß die Mediendichte des Vliesstoffes in Durchströmrichtung progressiv zunimmt. Der Luftfilter weist infolgedessen an der Rohluftseite eine geringe Faserdichte und große Filterporen auf. In diesem Bereich werden die größeren abzuscheidenden Teilchen aufgefangen. Zur Reinluftseite des Luftfilters hin nimmt die Faserdichte progressiv zu; entsprechend kleiner sind dort die durch die Fasern gebildeten Poren. Kleinere abzuscheidende Teilchen durchtreten zunächst den auf der Rohluftseite liegenden Bereich mit geringer Faserdichte und werden dann in einen Bereich mit höherer Faserdichte abgeschieden. Hierdurch wird erreicht, daß der Luftfilter über die gesamte Dicke des Filtermaterials mit den abzuscheidenden Teilchen beladen werden kann. Infolgedessen können hohe Filterstandzeiten und ein gleichbleibend geringer Druckverlust über die gesamte Filterlebensdauer erreicht werden.

Gemäß einer Weiterbildung der Erfindung ist vorgesehen, daß der Vliesstoff wenigstens eine erste der Rohluftseite zugewandte Faserschicht und eine zweite der Reinluftseite zugewandte Faserschicht aufweist.

Die Herstellung wird dadurch besonders vereinfacht, daß wenigstens eine der Faserschichten im wesentlichen aus einer vorab verfestigten Vliesstofflage besteht und daß wenigstens eine andere der Faserlagen im wesentlichen durch einen auf die Vliesstofflage aufgebrachten Faserflor gebildet ist, wobei der Faserflor und die Vliesstofflage durch das Flüssigkeitsstrahlen miteinander verbunden sind.

Besonders gute Filtereigenschaften werden dadurch erreicht, daß die durch den Faserflor gebildete Faserschicht an der Reinluftseite der Vliesstoffschicht angeordnet ist.

Besonders kleine Teilchen können in den Filter abgeschieden werden, wenn die durch den Faserflor gebildete Faserschicht die Splittfaser enthält.

In einer Weiterbildung der Erfindung ist vorgesehen, daß die der Rohluftseite zugewandte Faserschicht einen höheren Anteil an Grobfasern enthält als die der Reinluftseite zugewandte Faserschicht. Durch den höheren Anteil an Grobfasern in der der Rohluftseite zugewandten Faserschicht werden dort größere Poren gebildet.

Eine weitere Verbesserung der Filtereigenschaften wird dadurch erzielt, daß die Fasern elektrostatisch aufgeladen sind. Dies kann insbesondere durch eine Elektretbehandlung wie z. B. eine Coronabehandlung erfolgen.

Die kohäsive Verbindung der Fasern kann in besonders vorteilhafter Weise durch eine Verschmelzung eines Teils der Fasern erfolgen.

Die adhäsive Verbindung kann besonders einfach durch eine Verklebung der Fasern durch ein Bindemittel erfolgen. Bevorzugt werden bikomponente Bindefasem eingesetzt.

Insbesondere die Herstellungskosten des Luftfilters werden dadurch gesenkt, daß das Filtermaterial über seinen ganzen Querschnitt flüssigkeitsgestrahlt ist.

Eine besonders große Filteroberfläche wird dadurch erzielt, daß das Tiefenfiltermaterial plissiert ist.

### Kurzbeschreibung der Zeichnungen

Der Gegenstand der Erfindung wird nachfolgend anhand der Zeichnungen weiter verdeutlicht. Es zeigen:
Figur 1 einen erfindungsgemäßen Luftfilter,
Figur 2 eine schematische Darstellung eines Querschnitts durch das Filtermaterial gemäß einem ersten Ausführungsbeispiel, welches das Verständnis der Erfindung erleichtern soll,
Figur 3 eine schematische Darstellung eines Querschnitts durch das Filtermaterial gemäß einem zweiten Ausführungsbeispiel,
Figur 4 einen Querschnitt durch eine Splittfaser.

### Ausführung der Erfindung

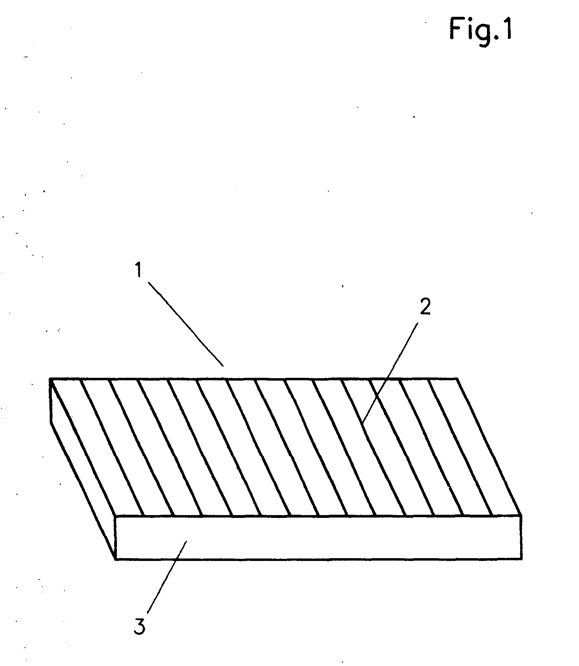

Figur 1 zeigt einen erfindungsgemäßen Luftfilter 1, der als Filterkassette ausgebildet ist. Er weist ein Filtermaterial 2 auf, welches parallel zu einer Seitenkante plissiert ist. Das Filtermaterial 2 ist ringsum durch einen Dichtstreifen 3 eingefaßt.

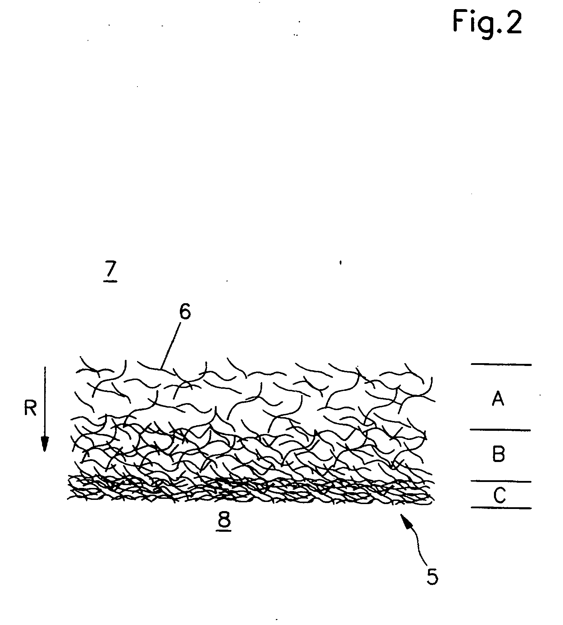

Das Filtermaterial 2 kann aus dem in Figur 2 , welche das Verständnis der Erfindung erleichtern soll, dargestellten Vliesstoff 5 bestehen. Dieser ist aus synthetischen Fasern 6 mit einem Titer von 0,05 bis 50 dtex gebildet und kann mit Hilfe von Kardiermaschinen (z. B. Krempeln) hergestellt werden.

Durch eine Hochdruckwasserstrahlbehandlung sind in dem Vliesstoff 5 Verschlingungen der Fasern 6 erzeugt.

Der Vliesstoff 5 weist in Durchströmrichtung R gesehen Bereiche A, B, C mit unterschiedlichen Eigenschaften auf, die es ermöglichen, Teilchen unterschiedlicher Größe in den unterschiedlichen Bereichen A, B, C abzuscheiden. Die unterschiedlichen Eigenschaften der Bereiche A, B, C werden bei der in Figur 2 dargestellten Ausführungsform dadurch erzielt, daß die Faserdichte in Durchströmrichtung R von der Rohluftseite 7 zur Reinluftseite 8 progressiv zunimmt. Die Zunahme der Faserdichte wird dadurch erhalten, daß der Vliesstoff 5 von der Reinluftseite 8 her einer Wasserstrahlbehandlung unterzogen wird. Durch eine solche einseitige Wasserstrahlbehandlung werden die Fasern 6 des Vliesstoffes 5 auf der Reinluftseite 8 stärker verdichtet als auf der dem Wasserstrahl abgewandten Rohluft- beziehungsweise Zuströmseite 7. Somit ist die Faserdichte in dem der Rohluftseite 7 zugewandte Bereich A geringer als in dem mittleren Bereich B und dort wiederum geringer als in dem der Reinluftseite 8 zugewandten Bereich C. Entsprechend nimmt die Größe der durch die Fasern 6 begrenzten Zwischenräume oder Poren des Vliesstoffes 5 vom Bereich A zum Bereich C hin ab. Infolgedessen können im Betrieb größere Teilchen in dem Bereich A des Luftfilters, kleinere Teilchen in dem Bereich B und die Feinstpartikel im Bereich C abgeschieden werden.

Die Fasern 6 des Vliesstoffes 5 werden nach der Flüssigkeitsstrahlbehandlung adhäsiv und/oder kohäsiv verbunden. Eine kohäsive Verbindung kann durch Verschweißen erfolgen, wobei die Fasern 6 bei erhöhter Temperatur zeitweilig erweichen und sich benachbarte Fasern 6 an ihren Berührungspunkten, gegebenenfalls unter Druck verbinden. Eine adhäsive Verbindung kann durch Verklebung der Fasern 6 durch ein Bindemittel erfolgen. Dieses kann in Form von sogenannten Bindefasern schon vor der Herstellung des Vlieses 5 beigemischt werden. Die Bindung erfolgt dann beispielsweise durch eine thermische Behandlung, wobei der Mantel der Bindefaser erweicht und benachbarte Fasern 6 untereinander örtlich verbindet. Eine adhäsive Verbindung kann auch durch Applizieren eines flüssigen Polymerbindemittels erfolgen, das durch eine anschließende Wärmebehandlung ausgehärtet wird.

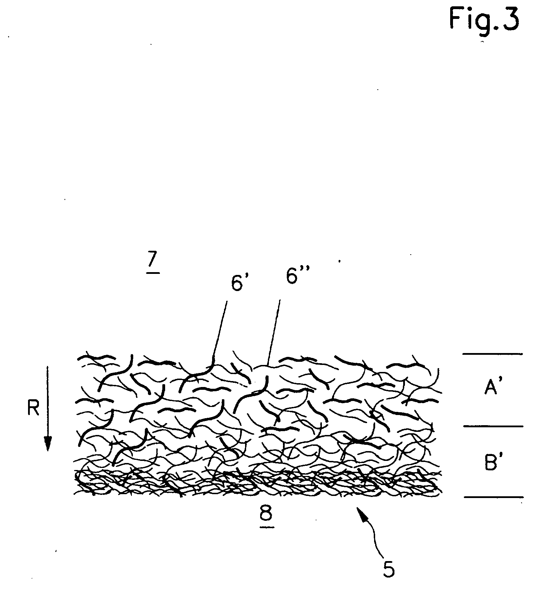

Figur 3 zeigt ein Ausführungsbeispiel des erfindungsgemäßen Vliesstoffes 5. Die Fasern 6 weisen Grobfasern 6' und Feinfasern 6" auf, wobei der Titer der Grobfasern um den Faktor 6 über dem der Feinfasern liegt. Die Bereiche A', B' des Vliesstoffes 5 mit unterschiedlichen Eigenschaften in der Durchströmrichtung R werden dadurch erhalten, daß wenigstens zwei Faserlagen mit unterschiedlichen Faserzusammensetzungen vorgesehen sind. Die der Rohluftseite 7 zugewandte Faserlage, welche in dem Bereich A' angeordnet ist, weist einen höheren Anteil an Grobfasern 6' auf als die der Reinluftseite 8 zugewandte Faserlage, welche im Bereich B' angeordnet ist. Gewichtsverhältnis der Feinfasern zu den Grobfasern in dem Vliesstoff 5 beträgt dabei 5 zu 95 bis 40 zu 60. Durch das Flüssigkeitsstrahlen werden Verschlingungen der Fasern 6', 6" erzeugt, welche die Faserlagen verbinden.

Zur Verbesserung der Abscheidung von Teilchen können die Fasern elektrostatisch aufgeladen werden. Dies kann durch eine Elektretbehandlung insbesondere durch eine Coronabehandlung geschehen.

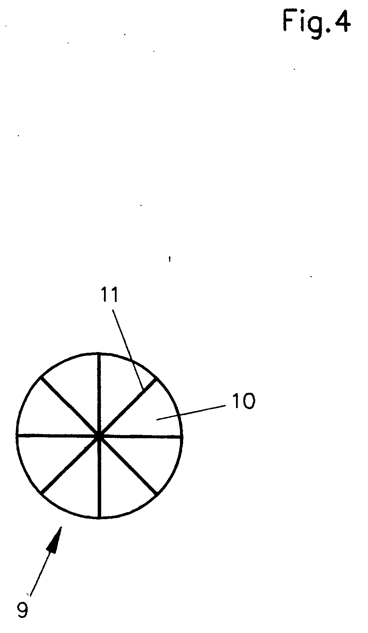

Die Feinfasern 6" können wenigstens teilweise aus gesplitteten Splittfasern 9 bestehen. Ein schematischer Querschnitt durch eine solche Splittfaser 9 ist in Figur 4 dargestellt. Die dargestellte Splittfaser 9 weist eine erste aus einem ersten Polymer gebildete Komponente 10 und eine zweite aus einem zweiten Polymer gebildete Komponente 11 auf. Bei dem in Figur 4 dargestellten Ausführungsbeispiel sind acht Segmente mit der Komponente 10 ausgebildet, wobei zwischen den Segmenten jeweils schichtförmig die Komponente 11 angeordnet ist. Beim Splitten oder Spalten der Splittfaser 9 bilden die acht Komponenten 10 jeweils einen der in den Figuren 2 und 3 dargestellten Fasern 6 beziehungsweise 6". Der Titer der durch das Spalten der Splittfaser 9 erzeugten Feinfasern 6" kann hinunter bis zu 0,05 dtex betragen. Die ungesplittete Splittfaser 9 hingegen ist deutlich gröber und kann infolgedessen einfach verarbeitet werden, indem sie dem Vliesstoff 5 beigemengt wird. Das Aufspalten der Splittfaser 9 erfolgt durch den auf die Splittfaser 9 ausgeübten Druck mittels der Wasserstrahlbehandlung.

Die Vorteile des erfindungsgemäßen Luftfilters und seines Herstellungsverfahrens werden im folgenden anhand von zwei Beispielen dargelegt.

### Beispiel 1

Der Vliesstoff in Beispiel 1 weist ein Massengewicht von 300 g/m² und ein Dikke (gemessen nach DIN 53855) von 3 mm auf. Er wird aus gekrempelter Stapelfaser hergestellt. Die Faserzusammensetzung beträgt 40% 0,9 dtex, 10% 6,7 dtex Polyesterfaser und 50% 2,2 dtex Polyester Bikomponentenfaser. Verschlingungen der Fasern werden durch einseitiges Wasserstrahlen mit einem Wasserdruck zwischen 50 und 100 bar erzeugt. Sodann wird der Vliesstoff in einem Thermofusionsofen getrocknet und durch Aktivierung der Bindefaser gebunden.

Dieser Vliesstoff hat eine Steifigkeit in Längsrichtung von 120 N mm² (gemessen bei 20° Biegewinkel nach DIN 53350). Dies ist etwa 3 mal so hoch wie bei einem Vliesstoff mit identischen Faserzusammensetzung, Gewicht und Dicke, der aber ohne Flüssigkeitsstrahlbehandlung erzeugt worden ist.

### Beispiel 2:

Der Vliesstoff in Beispiel 2 hat ein Massengewicht von 170 g/m² und eine Dicke (gemessen nach DIN 53855) von 0,9 mm. Dieser Vliesstoff wird aus zwei Floren aus gekrempelten Stapelfaser hergestellt. Die Faserzusammensetzung des ersten Flors, der 17 % des Gesamtgewichtes ausmacht, beinhaltet 50% einer Polyolefin Splittfaser mit 2,2 dtex (ungesplittet) und 50% einer Polypropylenfaser mit 6,7 dtex. Die Faserzusammensetzung des zweiten Flors beinhaltet 100% einer 36 dtex Polyolefin Bikomponentenfaser. Eine Verbindung der Flore durch Verschlingung der darin enthaltenen Fasern wird durch Wasserstrahlen, mit ein Wasserdruck zwischen 50 und 150 bar, erzeugt und unmittelbar danach in einem Thermofusionsofen getrocknet und durch Aktivierung der Bindefaser gebunden. Die daraus resultierende Vliesstoffstruktur weißt eine stetige Abnahme an feinen Fasern von der Feinfaserseite zur Grobfaserseite hin auf.

Die Vliesstoffstruktur hat eine Biegesteifigkeit, in Fertigungsrichtung, von 38,0 N·mm² (gemessen bei 20° Biegewinkel, nach DIN 53350). Dies ist dreimal so hoch ist wie ein Vergleichsfiltermaterial, welches sich aus drei in verschiedenen Arbeitsschritten hergestellten Lagen zusammensetzt, die ohne Flüssigkeitsstrahlen im Kalanderverfahren hergestellt sind, bei gleichem Gewicht und gleicher Dicke.

Eine anschließende elektrostatische Aufladung der Vliesstoffstruktur führt zu einer Filterleistung, welche die eines dreilagigen, ebenfalls elektrostatisch behandelten Vergleichsfiltermediums bei identischer Feinabscheidung (nach EN 143) und identischem Staubspeichervermögen, um 78 % in der Luftdurchlässigkeit (nach DIN 53887) übertrifft.

## Patentansprüche

1. Luftfilter mit einem Tiefenfiltermaterial (2), das einen eine Rohluftseite (7) und eine Reinluftseite (8) aufweisenden Vliesstoff (5) enthält, wobei der Vliesstoff (5) aus adhäsiv und/oder kohäsiv verbundenen Fasern (6) gebildet ist, wobei die Fasern (6) Grobfasern (6') und Feinfasern (6") enthalten, wobei die Fasern (6) Verschlingungen aufweisen, die vor dem adhäsiven und/oder kohäsiven Verbinden durch Flüssigkeitsstrahlen von der Reinluftseite (8) her erzeugt sind, wobei durch das Flüssigkeitsstrahlen die Fasern (6) von der Rohluftseite (7) zur Reinluftseite (8) hin zunehmend derart verdichtet sind, daß unterschiedlich verdichtete jeweils die Grobfasern (6') und Feinfasern (6") aufweisende Bereiche (A, B, C) gebildet sind, in denen Teilchen unterschiedlicher Größe abscheidbar sind.

2. Luftfilter nach Anspruch 1, **dadurch gekennzeichnet, daß** die Fasern (6) Verschlingungen aufweisen, die vor dem adhäsiven und/oder kohäsiven Verbinden durch Flüssigkeitsstrahlen zusätzlich von der Rohluftseite (7) her erzeugt sind.

3. Luftfilter nach Anspruch 1 oder 2, **dadurch gekennzeichnet, daß** die Fasern (6) einen Titer von 0,05 bis 50 dtex aufweisen.

4. Luftfilter nach einem der Ansprüche 1 bis 3, **dadurch gekennzeichnet, daß** der Titer der Grobfasern (6') mindestens um den Faktor 6 über dem Titer der Feinfasern (6") liegt.

5. Luftfilter nach Anspruch 4, **dadurch gekennzeichnet, daß** die Feinfasern (6") wenigstens teilweise aus gesplitteten Splittfasern (9) bestehen.

6. Luftfilter nach Anspruch 5, **dadurch gekennzeichnet, daß** die Splittfasern (9) durch die Flüssigkeitsstrahlbehandlung gesplittet sind.

7. Luftfilter nach einem der Ansprüche 1 bis 6, **dadurch gekennzeichnet, daß** die Mediendichte des Vliesstoffs (5) in Durchströmrichtung (R) progressiv zunimmt.

8. Luftfilter nach einem der Ansprüche 1 bis 7, **dadurch gekennzeichnet, daß** der Vliesstoff (5) wenigstens eine erste der Rohluftseite (7) zugewandte Faserschicht (A') und eine zweite der Reinluftseite (8) zugewandte Faserschicht (B') aufweist.

9. Luftfilter nach Anspruch 8, **dadurch gekennzeichnet, daß** wenigstens eine der Faserschichten (A', B') im wesentlichen aus einer vorab verfestigten Vliesstofflage besteht und daß wenigstens eine andere der Faserschichten im wesentlichen durch einen auf die Vliesstofflage aufgebrachten Faserflor gebildet ist, wobei der Faserflor und die Vliesstofflage durch das Flüssigkeitsstrahlen miteinander verbunden sind.

10. Luftfilter nach Anspruch 9, **dadurch gekennzeichnet, daß** die durch den Faserflor gebildete Faserschicht an der Reinluftseite (8) der Vliesstoffschicht angeordnet ist.

11. Luftfilter nach Anspruch 9 oder 10, **dadurch gekennzeichnet, daß** die durch den Faserflor gebildete Faserschicht die Splittfaser enthält.

12. Luftfilter nach einem der Ansprüche 7 bis 11, **dadurch gekennzeichnet, daß** die erste, der Rohluftseite (7) zugewandte Faserschicht (A') einen höheren Anteil an Grobfasern (6') enthält als die zweite der Reinluftseite (8) zugewandte Faserschicht (B').

13. Luftfilter nach einem der Ansprüche 1 bis 12, **dadurch gekennzeichnet, daß** die Fasern (6) elektrostatisch aufgeladen sind.

14. Luftfilter nach einem der Ansprüche 1 bis 13, **dadurch gekennzeichnet, daß** die kohäsive Verbindung durch Verschweißen der Fasern (6) erfolgt.

15. Luftfilter nach einem der Ansprüche 1 bis 14, **dadurch gekennzeichnet, daß** die adhäsive Verbindung durch Verklebung der Fasern (6) durch ein Bindemittel erfolgt.

16. Luftfilter nach einem der Ansprüche 1 bis 15, **dadurch gekennzeichnet, daß** das Filtermaterial über seinen ganzen Querschnitt flüssigkeitsgestrahlt ist.

17. Luftfilter nach einem der Ansprüche 1 bis 16, **dadurch gekennzeichnet, daß** das Tiefenfiltermaterial plissiert ist.

## Claims

1. An air filter having a depth filter material (2) comprising a nonwoven fabric (5) having an upstream side (7) and a downstream side (8), the nonwoven fabric (5) being formed from adhesively and/or cohesively bonded fibres (6), said fibres (6) comprising coarse fibres (6') and fine fibres (6") and having intertwinements produced by liquid-jetting from the downstream side (8) prior to the adhesive and/or cohesive bonding, wherein the liquid-jetting results in the fibres (6) being increasingly densified from the upstream side (7) toward the downstream side (8) so as to form differently densified regions (A, B, C) which each comprise the coarse fibres (6') and fine fibres (6") and in which particles of different sizes can be separated off.

2. An air filter according to claim 1, **characterized in that** the fibres (6) have intertwinements additionally produced by liquid-jetting from the upstream side (7) prior to the adhesive and/or cohesive bonding.

3. An air filter according to claim 1 or 2, **characterized in that** the fibres (6) have a linear density in the range from 0.05 to 50 dtex.

4. An air filter according to any one of claims 1 to 3, **characterized in that** the linear density of the coarse fibres (6') exceeds the linear density of the fine fibres (6") by a factor of 6 at least.

5. An air filter according to claim 4, **characterized in that** the fine fibres (6") consist at least partly of split splittable fibres (9).

6. An air filter according to claim 5, **characterized in that** the splittable fibres (9) are split by the liquid-jet treatment.

7. An air filter according to any one of claims 1 to 6, **characterized in that** the media density of the nonwoven fabric (5) progressively increases in the flow direction (R).

8. An air filter according to any one of claims 1 to 7, **characterized in that** the nonwoven fabric (5) comprises at least a first fibre layer (A') facing the upstream side (7) and a second fibre layer (B') facing the downstream side (8).

9. An air filter according to claim 8, **characterized in that** at least one of the fibre layers (A', B') consists essentially of a preconsolidated nonwoven fabric ply and **in that** at least one other of the fibre layers is formed essentially by a fibrous web applied atop the nonwoven fabric ply, the fibrous web and the nonwoven fabric ply being interconnected by the liquid-jetting.

10. An air filter according to claim 9, **characterized in that** the fibre layer formed by the fibrous web is disposed on the downstream side (8) of the nonwoven fabric layer.

11. An air filter according to claim 9 or 10, **characterized in that** the fibre layer formed by the fibrous web contains the splittable fibre.

12. An air filter according to any one of claims 7 to 11, **characterized in that** the first fibre layer (A') facing the upstream side (7) contains a higher proportion of coarse fibres (6') than the second fibre layer (B') facing the downstream side (8).

13. An air filter according to any one of claims 1 to 12, **characterized in that** the fibres (6) are electrostatically charged.

14. An air filter according to any one of claims 1 to 13, **characterized in that** the cohesive bonding is effected by welding the fibres (6) together.

15. An air filter according to any one of claims 1 to 14, **characterized in that** the adhesive bonding is effected by adhering the fibres (6) together by means of a binder.

16. An air filter according to any one of claims 1 to 15, **characterized in that** the filter material is liquid-jetted over its entire cross section.

17. An air filter according to any one of claims 1 to 16, **characterized in that** the depth filter material is pleated.

## Revendications

1. Filtre à air comprenant un matériau de filtration à lit profond (2) qui contient une nappe fibreuse (5) présentant un côté air brut (7) et un côté air pur (8), la nappe fibreuse (5) étant constituée de fibres (6) reliées par adhésion et/ou cohésion, les fibres (6) contenant des fibres grossières (6') et des fibres fines (6"), les fibres (6) présentant des entrelacements qui sont générés par des jets de liquide provenant du côté air pur (8) avant leur liaison par adhésion et/ou cohésion, les fibres (6) étant comprimées de plus en plus par le jet de liquide du côté air brut (7) vers le côté air pur (8) d'une manière telle qu'il se forme des zones (A, B, C) comprimées différemment et comprenant respectivement les fibres grossières (6') et les fibres fines (6") et dans lesquelles peuvent se déposer des particules de tailles différentes.

2. Filtre à air selon la revendication 1, **caractérisé en ce que** les fibres (6) présentent des entrelacements qui sont générés par des jets de liquide supplémentaires provenant du côté air brut (7) avant leur liaison par adhésion et/ou cohésion.

3. Filtre à air selon la revendication 1 ou 2, **caractérisé en ce que** les fibres (6) présentent un titre de 0,05 à 50 dtex.

4. Filtre à air selon l'une quelconque des revendications 1 à 3, **caractérisé en ce que** le titre des fibres grossières (6') est au moins supérieur d'un facteur 6 au titre des fibres fines (6").

5. Filtre à air selon la revendication 4, **caractérisé en ce que** les fibres fines (6") sont composées du moins partiellement de fibres fractionnées (9).

6. Filtre à air selon la revendication 5, **caractérisé en ce que** les fibres fractionnées (9) sont fractionnées par le traitement par jet de liquide.

7. Filtre à air selon l'une quelconque des revendications 1 à 6, **caractérisé en ce que** la densité de milieu de la nappe fibreuse (5) augmente progressivement dans le sens d'écoulement (R).

8. Filtre à air selon l'une quelconque des revendications 1 à 7, **caractérisé en ce que** la nappe fibreuse (5) présente au moins une première couche de fibres (A') tournée vers le côté air brut (7) et une deuxième couche de fibres (B') tournée vers le côté air pur (8).

9. Filtre à air selon la revendication 8, **caractérisé en ce qu'**au moins une des couches de fibres (A', B') est composée substantiellement d'une couche de nappe fibreuse consolidée préalablement et qu'au moins une autre des couches de fibres est composée substantiellement d'un voile de carde appliqué sur la couche de nappe fibreuse, le voile de carde et la couche de nappe fibreuse étant reliés l'un à l'autre par le jet de liquide.

10. Filtre à air selon la revendication 9, **caractérisé en ce que** la couche fibreuse constituée par le voile de carde est disposée du côté air pur (8) de la couche de nappe fibreuse.

11. Filtre à air selon la revendication 9 ou 10, **caractérisé en ce que** la couche fibreuse constituée par le voile de carde contient les fibres fractionnées.

12. Filtre à air selon l'une quelconque des revendications 7 à 11, **caractérisé en ce que** la première couche de fibres (A') tournée vers le côté air brut (7) contient une proportion de fibres grossières (6') plus élevée que la deuxième couche de fibres (B') tournée vers le côté air pur (8).

13. Filtre à air selon l'une quelconque des revendications 1 à 12, **caractérisé en ce que** les fibres (6) sont chargées électrostatiquement.

14. Filtre à air selon l'une quelconque des revendications 1 à 13, **caractérisé en ce que** la liaison par cohésion est faite en soudant les fibres (6).

15. Filtre à air selon l'une quelconque des revendications 1 à 14, **caractérisé en ce que** la liaison par adhésion est faite en collant les fibres (6) à l'aide d'un liant.

16. Filtre à air selon l'une quelconque des revendications 1 à 15, **caractérisé en ce que** le matériau de filtration reçoit un jet de liquide sur toute sa section transversale.

17. Filtre à air selon l'une quelconque des revendications 1 à 16, **caractérisé en ce que** le matériau de filtration à lit profond est plissé.
